# EUROPÄISCHE PATENTSCHRIFT

(11) **EP 3 737 597 B1**
(45) Veröffentlichungstag und Bekanntmachung des Hinweises auf die Patenterteilung: **22.02.2023**
(21) Anmeldenummer: 19700640.6
(22) Anmeldetag: 07.01.2019
(51) Int. Cl.: B61C 15/10, B65G 53/46

(54) **SIEBELEMENT ZUM SIEBEN UND FÖRDERN VON STREUGUT ZUR AUFNAHME AN EINE SANDUNGSVORRICHTUNG EINER SANDUNGSANLAGE FÜR EIN FAHRZEUG, SANDUNGSVORRICHTUNG MIT EINEM SIEBELEMENT, VERFAHREN ZUM ERZEUGEN UND VERFAHREN ZUM BETREIBEN EINES SIEBELEMENTS**
SCREENING ELEMENT FOR SCREENING AND TRANSPORTING GRIT MATERIAL, FOR APPLYING TO A SANDING DEVICE OF A SANDING APPARATUS FOR A VEHICLE, SANDING DEVICE COMPRISING A SCREENING ELEMENT, PRODUCTION METHOD, AND METHOD FOR OPERATING A SCREENING ELEMENT
ÉLÉMENT DE TAMISAGE SERVANT AU TAMISAGE ET AU TRANSPORT DE PRODUIT À ÉPANDRE, DESTINÉ À ÊTRE LOGÉ SUR UN DISPOSITIF DE SABLAGE D'UN SYSTÈME DE SABLAGE D'UN VÉHICULE, DISPOSITIF DE SABLAGE MUNI D'UN ÉLÉMENT DE TAMISAGE, PROCÉDÉ DE PRODUCTION ET PROCÉDÉ PERMETTANT DE FAIRE FONCTIONNER UN ÉLÉMENT DE TAMISAGE

(30) Priorität: 08.01.2018 DE 102018100264
(43) Veröffentlichungstag der Anmeldung: 18.11.2020
(73) Patentinhaber: Knorr-Bremse Gesellschaft mit beschränkter Haftung, 2340 Mödling (AT)
(72) Erfinder: KRISMANIC, Georg, 1020 Wien (AT); LANG, Andreas, 1050 Wien (AT); MISSLIWETZ, Albert, 1020 Wien (AT)
(74) Vertreter: Aurigium Leischner & Luthe
(86) Internationale Anmeldenummer: PCT/EP2019/050205
(87) Internationale Veröffentlichungsnummer: WO 2019/134986

(56) Entgegenhaltungen:
- WO-A1-00/75056
- WO-A1-2016/118995
- WO-A1-2016/118996
- DE-B- 1 024 881

## Beschreibung

Der vorliegende Ansatz bezieht sich auf ein Siebelement zum Sieben und Fördern von Streugut zur Aufnahme an eine Sandungsvorrichtung einer Sandungsanlage für ein Fahrzeug, eine Sandungsvorrichtung mit einem Siebelement, ein Verfahren zum Erzeugen und ein Verfahren zum Betreiben eines Siebelements.

Es gibt Sandungsanlagen, die eine Zellenradschleuse mit vertikaler Achse (auch horizontale Zellradschleuse genannt) zur Dosierung von Streugut oder Schüttgut aufweisen. Vor der Dosierung gelangt das Streugut von einem Sandvorratsbehälter der Sandungsanlage zu einer Zulauföffnung zum Zellenrad.

Die WO 11127937 A1 beschreibt eine Sandungsanlage mit horizontaler Zellenradschleuse zur Dosierung von Schüttgut. Die DE 19501179 A1 und die

DE 2606483 A1 beschreiben Dosieranlagen für Streugut mit vertikaler Drehachse. In der DE 19501179 A1 werden Rührstäbe und Rührflügel eingesetzt, um den Sand fließbar zu machen und ein Totvolumen zu beseitigen. In der DE 2606483 A1 wird der Sand generell über ein eigenes Füllrohr zugeführt. Die DE 10 24 881 offenbart eine Vorrichtung zum gleichmäßigen Aufgeben von staubförmigem bis grießigem Schüttgut. Vor diesem Hintergrund ist es die Aufgabe des vorliegenden Ansatzes ein Siebelement zum Sieben und Fördern von Streugut zur Aufnahme an eine Sandungsvorrichtung einer Sandungsanlage für ein Fahrzeug, eine verbesserte Sandungsvorrichtung mit einem Siebelement, ein Verfahren zum Erzeugen und ein Verfahren zum Betreiben eines Siebelements zu schaffen.

Diese Aufgabe wird durch ein Siebelement zum Sieben und Fördern von Streugut zur Aufnahme an eine Sandungsvorrichtung einer Sandungsanlage für ein Fahrzeug, eine Sandungsvorrichtung mit einem Siebelement, ein Verfahren zum Erzeugen und ein Verfahren zum Betreiben eines Siebelements gemäß den Hauptansprüchen gelöst.

Die mit dem vorgestellten Ansatz erreichbaren Vorteile bestehen darin, dass ein hier vorgestelltes Siebelement im Betrieb in oder an einer Sandungsvorrichtung Streugut vor einem Eintritt in eine Zulauföffnung eines Zellenrads der Sandungsvorrichtung siebt und auch fördert. Durch das hier vorgestellte Siebelement kann somit verhindert werden, dass Fremdkörper oder Sandklumpen in das Zellenrad gelangen und zudem wird ein gleichmäßiges und gründliches Fördern des Sandes zu der Zulauföffnung des Zellenrads gewährleistet. Hierbei beansprucht das Siebelement vorteilhafterweise lediglich einen äußerst geringen Bauraum.

Ein Siebelement zum Sieben und Fördern von Streugut ist zur Aufnahme an eine Sandungsvorrichtung einer Sandungsanlage für ein Fahrzeug ausgeformt. Das Siebelement weist ein Plattenelement mit einer Wellenkoppeleinrichtung, zumindest eine Durchlassöffnung und zumindest eine Lasche auf. Die Wellenkoppeleinrichtung ist zum Koppeln des Siebelements mit einer Welleneinrichtung eines Zellenrads der Sandungsvorrichtung ausgeformt. Die Durchlassöffnung ist in dem Plattenelement angeordnete und zum Durchlassen von Streugut durch das Plattenelement ausgeformt. Die Lasche erstreckt sich quer oder unter einem definierten Winkel zu einer Hauptoberfläche des Plattenelements von dem Plattenelement weg.

Bei der Sandungsvorrichtung kann es sich um zumindest ein Element einer Sandungsanlage, beispielsweise ein Element einer Sanddosiereinrichtung der Sandungsanlage handeln. Eine solche Sanddosiereinrichtung kann zum Dosieren von Streugut wie Sand beispielsweise ein Zellenrad aufweisen, welches wiederum eine vertikale Rotationsachse aufweisen kann. Beispielsweise kann die Sandungsvorrichtung eine Welleneinrichtung der Sanddosiereinrichtung sein oder aufweisen, wobei die Welleneinrichtung zum Bewegen des Zellenrads mit diesem gekoppelt oder koppelbar sein kann. Die Sandungsvorrichtung kann auch das Zellenrad aufweisen.

Bei dem Fahrzeug kann es sich um ein Schienenfahrzeug handeln.

Die Wellenkoppeleinrichtung des Siebelements ist dazu ausgeformt, um das Siebelement beispielsweise an einem Wellengehäuse der Welleneinrichtung des Zellenrads koppelbar zu machen. In einem gekoppelten Zustand mit der Welleneinrichtung ist so vorteilhafterweise eine Drehmomentübertragung der Welleneinrichtung auf das Siebelement ermöglicht, wodurch sich auch dieses im Betrieb des Zellenrads an der Welleneinrichtung dreht.

Das hier vorgestellte Siebelement kann zwischen einem Sandvorratsbehälter der Sandungsanlage und einer Zulauföffnung des Zellenrads angeordnet oder anordenbar sein. Die Durchlassöffnung ermöglicht so vorteilhafterweise ein gesiebtes Durchlassen von Streugut von dem Sandvorratsbehälter zu der Zulauföffnung. Die Durchlassöffnung kann langkreisförmig ausgestaltet sein.

Wenn die Siebeinrichtung wie beschrieben mit der Welleneinrichtung gekoppelt ist, ist die Lasche vorteilhafterweise dazu angeordnet und ausgeformt, um das Streugut zu bewegen, wenn sich die Welleneinrichtung bewegt. So kann beispielsweise nasses Streugut durch die Lasche aufgebrochen und/oder gelockert werden und/oder in eine Richtung geschaufelt werden.

Das Plattenelement kann als ein Blech ausgeformt sein.

Das Siebelement kann gemäß einer Ausführungsform kreisförmig ausgestaltet sein.

Die Wellenkoppeleinrichtung kann in einer Mitte des Plattenelements angeordnet sein, insbesondere wobei die Wellenkoppeleinrichtung als eine Wellendurchgangsöffnung zum Durchführen der Welleneinrichtung ausgeformt sein kann. Beispielsweise kann die Wellenkoppeleinrichtung eine Sechskant-Öffnung und/oder eine Polygon-Öffnung und/oder eine Passfeder und/oder eine Passfeder-Nut und/oder eine Verzahnung aufweisen. Die Wellenkoppeleinrichtung kann mit dem Wellengehäuse verschweißt, verklebt, verklemmt und/oder verpresst sein oder werden, um das Siebelement mittels der Welleneinrichtung in der Sandungsanlage beweglich zu machen.

Die Lasche kann sich von einer Innenrandseite der Durchlassöffnung erstrecken. Die Lasche kann rechteckig oder halbrund oder dreieckig oder als ein Bolzen ausgeführt sein. Ein Winkel der Lasche kann geneigt zu einem Mittelpunkt sein, um beim Bewegen des Siebelements Streugut in eine Richtung schaufeln zu können.

Gemäß einer Ausführungsform kann das Siebelement zumindest eine weitere Lasche aufweisen, die sich quer oder unter einem definierten Winkel zu der Hauptoberfläche von dem Plattenelement weg erstreckt, insbesondere wobei sich die weitere Lasche von einer quer zu der Innenrandseite angeordneten weiteren Innenrandseite der Durchlassöffnung erstrecken kann. Eine derartige Anordnung von Lasche und weiterer Lasche kann ein effektives Aufbrechen und/oder Schaufeln von Streugut ermöglichen.

Das Siebelement kann auch zumindest eine in dem Plattenelement angeordnete zusätzliche Durchlassöffnung und/oder zumindest eine zusätzliche Lasche aufweisen, die sich quer oder unter einem definierten Winkel zu einer der Hauptoberfläche gegenüberliegenden Hauptoberfläche des Plattenelements von dem Plattenelement weg erstrecken kann. Wenn sich demnach zu beiden Hauptoberflächen des Siebelements Laschen von dem Plattenelement weg erstrecken, so ist ein Fördern des Streuguts sowohl vor als auch nach dem Sieben ermöglicht. Beispielsweise kann das Siebelement derart an der Welleneinrichtung angeordnet sein oder werden, dass sich die Lasche und die weitere Lasche in Richtung des Sandvorratsbehälters und die zusätzliche Lasche in Richtung der Zulauföffnung des Zellenrads erstrecken. In einer solchen Position kann die zusätzliche Lasche im Betrieb des Siebelements verhindern, dass sich unter dem Siebelement bereits gesiebtes Streugut ansammeln oder anstauen kann.

Das Plattenelement und die Lasche und/oder die weitere Lasche und/oder die zusätzliche Lasche können einstückig ausgeformt sein, insbesondere wobei die Durchlassöffnung und/oder die zusätzliche Durchlassöffnung durch ein Stanzverfahren und/oder die Lasche und/oder die weitere Lasche und/oder die zusätzliche Lasche durch ein Biegeverfahren eines gestanzten oder gelaserten Plattenabschnitts des Plattenelements erzeugt worden sein kann. Denkbar ist ebenfalls, dass die Druchlassöffnung mittels eines Laserns, Erodierens, Wasserstrahlschneidens, spanabhebenden Verfahrens oder Ähnlichem erfolgen kann.

Das Siebelement kann vier der Durchlassöffnungen und/oder vier der Laschen und/oder vier der weiteren Laschen und/oder vier der zusätzlichen Durchlassöffnungen und/oder vier der zusätzlichen Laschen aufweisen. Die Durchlassöffnungen und die zusätzlichen Durchlassöffnungen können um die Wellenkoppeleinrichtung herum angeordnet sein, insbesondere wobei die Durchlassöffnungen jeweils benachbart zu den zusätzlichen Durchlassöffnungen angeordnet sein können. Eine derartige Anzahl und Anordnung der Durchlassöffnungen und Laschen ermöglicht ein effektives Sieben und Fördern von Streugut in der Sandungsanlage.

Eine Sandungsvorrichtung weist ein Siebelement auf, das in einer der vorgestellten Varianten ausgeformt ist, insbesondere wobei das Siebelement an einer Welleneinrichtung angeordnet und/oder befestigt ist. Eine solche Sandungsvorrichtung kann als Ersatz für bekannte Sandungsvorrichtungen dienen, wobei die hier vorgestellte Sandungsvorrichtung vorteilhafterweise ein Sieben und gründliches Fördern von Streugut vor einem Eintritt des Streuguts in eine Zulauföffnung eines Zellenrads in einer Sandungsanlage ermöglicht.

Ein Verfahren zum Erzeugen eines der vorgestellten Siebelemente weist zumindest die folgenden Schritte auf:
Stanzen, Ausformen und/oder Lasern zumindest einer Durchlassöffnung in ein Plattenelement; und

Anordnen zumindest einer Lasche, die sich quer zu einer Hauptoberfläche des Plattenelements von dem Plattenelement weg erstreckt, um das Siebelement zu erzeugen.

Im Schritt des Stanzens kann außerdem eine Wellenkoppeleinrichtung in das Plattenelement gestanzt werden. Im Schritt des Anordnens kann ein gestanzter Plattenabschnitt des Plattenelements gebogen werden, um die Lasche anzuordnen, um das Siebelement zu erzeugen.

Ein Verfahren zum Betreiben eines der vorgestellten Siebelemente weist zumindest die folgenden Schritte auf:
Bewegen des Siebelements, um gesiebtes Streugut zu erhalten; und
Fördern des gesiebten Streuguts mittels des sich bewegenden Siebelements.

Ausführungsbeispiele des hier vorgestellten Ansatzes werden in der nachfolgenden Beschreibung mit Bezug zu den Figuren näher erläutert. Es zeigen:
Fig. 1 eine schematische Querschnittdarstellung einer Sandungsanlage mit einer Sandungsvorrichtung mit einem Siebelement zum Sieben und Fördern von Streugut für ein Fahrzeug gemäß einem Ausführungsbeispiel;
Fig. 2 eine perspektivische Darstellung eines Siebelements gemäß einem Ausführungsbeispiel;
Fig. 3 ein Ablaufdiagramm eines Verfahrens zum Erzeugen eines Siebelements gemäß einem Ausführungsbeispiel; und
Fig. 4 ein Ablaufdiagramm eines Verfahrens zum Betreiben eines Siebelements gemäß einem Ausführungsbeispiel.

In der nachfolgenden Beschreibung günstiger Ausführungsbeispiele des vorliegenden Ansatzes werden für die in den verschiedenen Figuren dargestellten und ähnlich wirkenden Elemente gleiche oder ähnliche Bezugszeichen verwendet, wobei auf eine wiederholte Beschreibung dieser Elemente verzichtet wird.

Umfasst ein Ausführungsbeispiel eine "und/oder"-Verknüpfung zwischen einem ersten Merkmal und einem zweiten Merkmal, so ist dies so zu lesen, dass das Ausführungsbeispiel gemäß einer Ausführungsform sowohl das erste Merkmal als auch das zweite Merkmal und gemäß einer weiteren Ausführungsform entweder nur das erste Merkmal oder nur das zweite Merkmal aufweist.

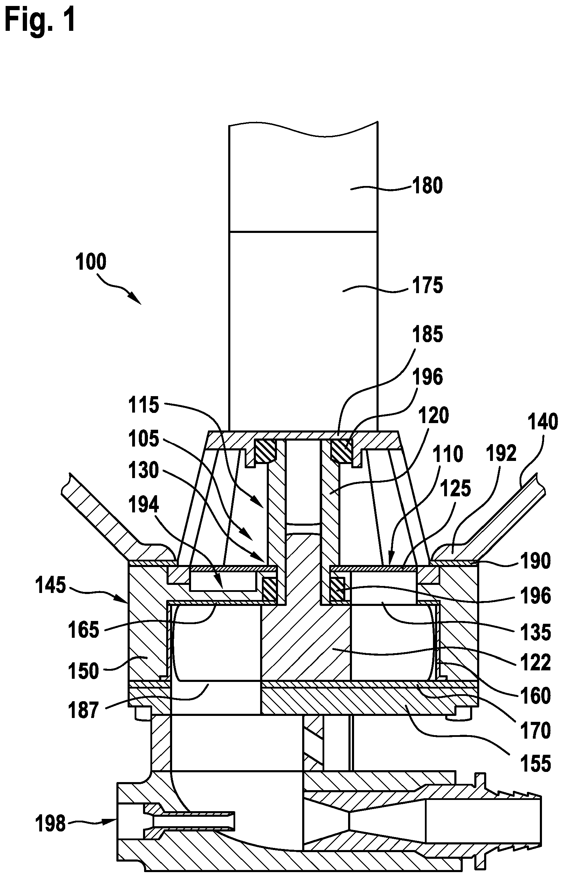

**Fig. 1** zeigt eine schematische Querschnittdarstellung einer Sandungsanlage 100 mit einer Sandungsvorrichtung 105 mit einem Siebelement 110 zum Sieben und Fördern von Streugut für ein Fahrzeug gemäß einem Ausführungsbeispiel. Die Sandungsanlage 100 ist zur Verwendung mit einem Fahrzeug, gemäß diesem Ausführungsbeispiel mit einem Schienenfahrzeug, ausgeformt.

Gemäß diesem Ausführungsbeispiel weist die Sandungsvorrichtung 105 das Siebelement 110 und zumindest eine Welleneinrichtung 115 auf, an der das Siebelement 110 gemäß diesem Ausführungsbeispiel angeordnet ist. Gemäß diesem Ausführungsbeispiel ist das Siebelement 110 an einer Wellenhülse 120 der Welleneinrichtung 115 befestigt. Gemäß diesem Ausführungsbeispiel weist die Sandungsvorrichtung 105 optional außerdem ein Zellenrad 122 auf, das mit der Welleneinrichtung 115 gekoppelt ist.

Das Siebelement 110 ist dazu ausgebildet, um Streugut zu sieben und zu fördern.

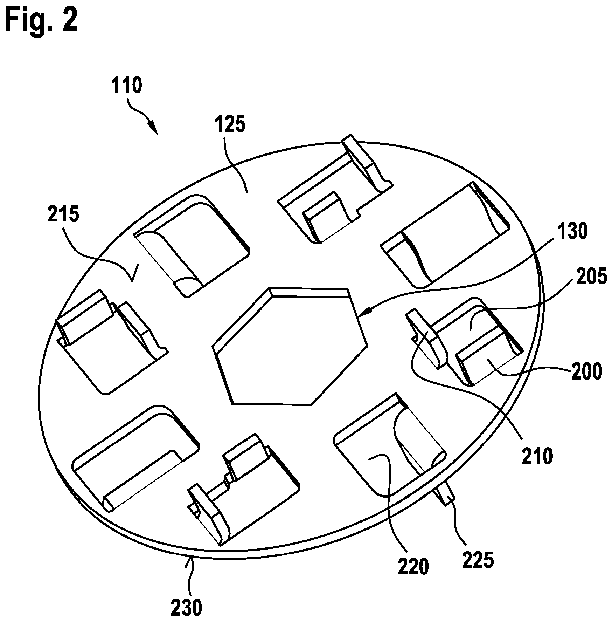

Das Siebelement 110 weist ein Plattenelement 125 mit einer Wellenkoppeleinrichtung 130, zumindest eine Durchlassöffnung und zumindest eine Lasche auf. Die Durchlassöffnung und die Lasche sind in Fig. 2 genauer dargestellt. Die Wellenkoppeleinrichtung 130 ist zum Koppeln des Siebelements 110 mit der Welleneinrichtung 115 des Zellenrads 122 der Sandungsvorrichtung 105 ausgeformt. Gemäß diesem Ausführungsbeispiel ist die Wellenkoppeleinrichtung 130 als eine Wellendurchgangsöffnung ausgeformt, durch die die Welleneinrichtung 115 durchgeführt ist. Die Durchlassöffnung ist in dem Plattenelement 125 angeordnet und dazu ausgeformt, um Streugut durch das Plattenelement 125 durchzulassen. Die Lasche erstreckt sich quer zu einer Hauptoberfläche des Plattenelements 125 von dem Plattenelement 125 weg.

Im Folgenden werden Details des hier vorgestellten Siebelements 110 und der Sandungsvorrichtung 105 noch einmal genauer ausgeführt.

Ein hier vorgestellter Ansatz bezieht sich auf eine mechanische Sanddosiereinrichtung in Form der Sandungsvorrichtung 105 mit Zellenradschleuse für ein Sandungssystem in Form der Sandungsanlage 100 für Fahrzeuge, insbesondere Schienenfahrzeuge, um die Reibung zwischen Fahrzeugrad und dem Untergrund, insbesondere der Schiene, zu erhöhen.

Das hier vorgestellte Siebelement 110 behebt vorteilhafterweise Schwachstellen und Mängel bekannter Sanddosiereinrichtungen mit Zellenradschleusen, die wie die hier gezeigte Sandungsanlage 100 im Speziellen eine vertikale Rotationsachse aufweisen, indem das Siebelement 110 ein Sieben und Fördern des Streuguts vor einem Eintritt in eine Zulauföffnung 135 zum Zellenrad 122 ermöglicht. Zellenräder 122 mit vertikaler Rotationsachse haben sich für Dosiereinrichtungen für Schienenfahrzeuge als verschleißärmer und platzsparender erwiesen als solche mit horizontaler Achse.

Durch Feuchtigkeit verursachte Sandverklumpungen oder in einem Sandvorratsbehälter 140 der Sandungsanlage 100 befindliche Fremdkörper können zu Verstopfungen in der Zulauföffnung 135 des Zellenradgehäuses oder in der nachfolgenden pneumatischen Förderereinrichtung 198 führen. Aus bekannten Ausführungen sind vor der Zulauföffnung angebrachte Rührstangen oder Siebe bekannt, wobei die Rührstangen das Problem der Verklumpungen lösen sollen und den Sand fließfähiger machen und die Siebe Fremdkörper abhalten sollen. Bei den bekannten Ausführungen mit Rührstäben und Rührflügeln, um den Sand fließbar zu machen und ein Totvolumen zu beseitigen, ist ein großes, oberhalb des Zellenradgehäuses befindliches Rührgehäuse erforderlich. Das hier vorgestellte Siebelement 110 behebt vorteilhafterweise als nur ein einziges Bauteil beide Probleme und ist dabei wesentlich platzsparender einsetzbar. Auch ein eigenes Füllrohr ist dank des hier vorgestellten Siebelements 110 nicht notwendig.

Gelöst werden obige Probleme durch ein oberhalb des Zellenradgehäuses des Zellenrads 122 und dessen Zulauföffnung 135 befindliches Aktivatorblech in Form des Siebelements 110, welches die zumindest eine Durchlassöffnung und die eine Lasche aufweist. Besagtes Aktivatorblech ist über die Welleneinrichtung 115 mit dem Zellenrad 122 starr verbunden und dreht sich mit diesem mit. Während die Durchlassöffnung als Sieb für große Sandverklumpungen und Fremdkörper dient, bewirkt die Lasche wie eine Schaufel, dass Schüttgut oder Sand mitgenommen und in die Zulauföffnung geschoben wird.

Es folgt eine Beschreibung eines hier gezeigten beispielhaften Aufbaus der Sandungsanlage 100, die auch als eine Sandungseinheit bezeichnet werden kann.

Bei der Sanddosiereinrichtung in Form der Sandungsvorrichtung 105 handelt es sich gemäß diesem Ausführungsbeispiel um eine mechanische Dosiereinrichtung mit dem Zellenrad 122, welches um eine vertikale Achse rotiert. Dieses Zellenrad 122 ist gemäß diesem Ausführungsbeispiel in einem Gehäuse 145 untergebracht, welches mehrteilig ausgebildet ist und aus einem Gehäusehauptstück 150 und einer Gehäusebodenplatte 155 besteht. Das Gehäuse 145 ist zur Aufnahme einer zylinderförmigen Buchse 160, des darin rotierbar gelagerten Zellenrades 122, zweier die zylinderförmige Buchse 160 oben und unten abschließenden Deckscheiben 165, 170 sowie einer ein Getriebe 175 und einen Motor 180 tragenden Glocke 185 ausgestaltet.

Die Deckscheiben 165, 170 bestimmen Formen der Zulauföffnung 135 und einer Auslassöffnung 187. Die Zulauföffnung 135 in der oberen Deckscheibe 165 hat gemäß diesem Ausführungsbeispiel die Form eines Kreisringsektors und bemisst in ihrer Ausdehnung 135°, was gemäß diesem Ausführungsbeispiel exakt drei Kammern des Zellenrades 122 entspricht. In ihrem Durchmesser ist die zweite Hälfte, welche die Flügel des Zellenrades 122 bei einer Umdrehung als Letztes überstreichen, breiter ausgebildet. Diese Form gewährleistet ein vollständiges Befüllen der Kammern im Zellenrad 122.

Die Glocke 185 ist gemäß diesem Ausführungsbeispiel derartig ausgebildet, dass sie Abstützungen für den Motor 180 und dazwischen liegende Öffnungen zum Einströmen des Sandes besitzt. Die Glocke 185 weist ebenfalls eine Verdrehsicherung auf und ist zusammen mit dem Gehäusehauptstück 150 verschraubt und mit einem oben aufgelegten Dichtring 190 versehen.

Das Gehäuse 145 wird bei der Montage im Schienenfahrzeug als Ganzes in einer unteren Öffnung des Sandvorratsbehälters 140 eingebracht, derart, dass der Sandvorratsbehälter 140 einen in seiner unteren Öffnung angebrachten Montagering 192 aufweist, welcher nochmals durch eine Hauptverschraubung mittels sechs großer Schrauben mit dem Dichtring 190, dem Gehäusehauptstück 150, der unteren Deckscheibe 170 und der Gehäusebodenplatte 155 verschraubt wird. Somit ragt das Gehäuse 145 aus dem Sandvorratsbehälter 140 heraus und stellt dessen Auslassöffnung dar. Glocke 185, Getriebe 175 und Motor 180 befinden sich im Inneren des Sandvorratsbehälters 140. Zwecks erhöhter Kompatibilität mit den Auslassöffnungen bestehender Sandvorratsbehälter 140 ist gemäß diesem Ausführungsbeispiel optional zwischen Montagering 192 und Gehäuse 145 eine Adapterplatte angeordnet.

Auf der Glocke 185 sitzend befinden sich der Motor 180, der gemäß diesem Ausführungsbeispiel ein Elektromotor ist, und unter ihm das Getriebe 175. Das Moment des Getriebes 175 wird durch die Wellenhülse 120 an das Zellenrad 122 weitergegeben, indem die Wellenhülse 120 axiale Fortsätze von Getriebe 175 und Zellenrad 122 aufnimmt und durch Drehverriegelung miteinander koppelt.

Die Wellenhülse 120 bietet gemäß diesem Ausführungsbeispiel einen Sechskantabschnitt zum verdrehgesicherten Aufsetzen des Siebelements 110. Die Wellendurchgangsöffnung des Siebelements ist gemäß diesem Ausführungsbeispiel entsprechend als eine Sechskant-Öffnung ausgeformt, siehe hierzu auch Fig. 2. Das aufgesetzte Siebelement 110 ist vor Hinunterrutschen durch einen Sicherheitsring fixiert. Die Lasche oder zumindest eine in Fig. 2 näher gezeigte zusätzliche Lasche des Siebelements 110, diese zusätzliche Lasche kann auch als Schaufel bezeichnet werden, greift gemäß diesem Ausführungsbeispiel in eine Rinne 194, die durch die Innenseite der Glocke 185 einerseits, und durch eine Erhebung des Gehäusehauptstückes 150 andererseits gebildet ist. Jene Erhebung ist zum Schutz eines darunterliegenden, die Wellenhülse 120 umschließenden Wellendichtringes 196 gedacht. Ein Totvolumen, ähnlich wie es sich in der beschriebenen Rinne 194 ausbildet, ist bei einer Konstruktion, bei welcher das Zellenradgehäuse in einem Auslauf des Sandvorratsbehälters 140 liegt und eine Sandzufuhr von oben in das Gehäuse 145 erfolgt, nahezu unvermeidbar.

An einer Unterseite der Gehäusebodenplatte 155 befestigbar ist eine pneumatische Fördereinrichtung 198.

Es folgt eine Beschreibung einer Funktionsweise der Sandungsanlage 100:
Das Streugut, in diesem Fall Sand, des Sandvorratsbehälters 140, dessen Wände zur Auslassöffnung trichterförmig nach unten verlaufend sind, kann durch die Schwerkraft in die Zulauföffnung 135 des Gehäuses 145 einrieseln, bzw. wird, wenn er neben der Zulauföffnung 135 auf einer Oberseite des Gehäuses 145 zum Liegen kommt, von den Laschen des Siebelements 110 in die Zulauföffnung 135 hineingeschoben. Im Gehäuse 145 wird der Sand in den gleichmäßig gefüllten Kammern des Zellenrades 122 durch die vom Motor 180 verursachte Drehung des Zellenrades 122 von der Zulauföffnung 135 zur Auslassöffnung 187 befördert. Dort kann er wieder schwerkraftbedingt zur Düse der Fördereinrichtung 198 hinunterrieseln, welche den dosierten Sand dann über eine Förderleitung vor die Räder des Schienenfahrzeuges befördert.

**Fig. 2** zeigt eine perspektivische Darstellung eines Siebelements 110 gemäß einem Ausführungsbeispiel. Dabei kann es sich um ein Ausführungsbeispiel des anhand von Fig. 1 beschriebenen Siebelements 110 handeln.

Das Plattenelement 125 ist gemäß diesem Ausführungsbeispiel als ein Blech ausgeformt und/oder kreisförmig ausgestaltet.

Die Wellenkoppeleinrichtung 130 ist gemäß diesem Ausführungsbeispiel in einer Mitte des Plattenelements 125 angeordnet.

Die Lasche 200 erstreckt sich von einer Innenrandseite der Durchlassöffnung 205.

Das Siebelement 110 weist gemäß diesem Ausführungsbeispiel zumindest eine weitere Lasche 210 auf, die sich quer zu der Hauptoberfläche 215 von dem Plattenelement 110 weg erstreckt. Gemäß diesem Ausführungsbeispiel erstreckt sich die weitere Lasche 210 von einer quer zu der Innenrandseite angeordneten weiteren Innenrandseite der Durchlassöffnung 205.

Das Siebelement 110 weist außerdem gemäß diesem Ausführungsbeispiel zumindest eine in dem Plattenelement 125 angeordnete zusätzliche Durchlassöffnung 220 und/oder zumindest eine zusätzliche Lasche 225 auf, die sich quer zu einer der Hauptoberfläche 215 gegenüberliegenden Hauptoberfläche 230 des Plattenelements 125 von dem Plattenelement 125 weg erstreckt. Gemäß diesem Ausführungsbeispiel erstreckt sich die zusätzliche Lasche 225 von einer zusätzlichen Innenrandseite der zusätzlichen Durchlassöffnung 220.

Gemäß einem alternativen Ausführungsbeispiel erstreckt sich zumindest eine der Laschen 200, 210 von der Hauptoberfläche 215 und/oder zumindest die eine zusätzliche Lasche 225 von der gegenüberliegenden Hauptoberfläche 230 weg.

Gemäß diesem Ausführungsbeispiel sind das Plattenelement 125 und zumindest die Lasche 200 und/oder die weitere Lasche 210 und/oder die zusätzliche Lasche 225 einstückig ausgeformt. Gemäß diesem Ausführungsbeispiel ist zumindest die Durchlassöffnung 205 und/oder die zusätzliche Durchlassöffnung 220 durch ein Stanzverfahren und/oder zumindest die Lasche 200 und/oder die weitere Lasche 210 und/oder die zusätzliche Lasche 225 durch ein Biegeverfahren eines gestanzten oder gelaserten Plattenabschnitts des Plattenelements 125 erzeugt worden. Denkbar ist ferner auch ein Ausführungsbeispiel, bei dem das Siebelement aus Kunststoff und/oder aus Metalldruckguss geformt ist.

Gemäß diesem Ausführungsbeispiel weist das Siebelement 110 vier der Durchlassöffnungen 205 und/oder vier der Laschen 200 und/oder vier der weiteren Laschen 210 und/oder vier der zusätzlichen Durchlassöffnungen 220 und/oder vier der zusätzlichen Laschen 225 auf.

Die vier Durchlassöffnungen 205 und die vier zusätzlichen Durchlassöffnungen 220 sind um die Wellenkoppeleinrichtung 130 herum angeordnet. Die Durchlassöffnungen 205 sind gemäß diesem Ausführungsbeispiel jeweils benachbart zu den zusätzlichen Durchlassöffnungen 220 angeordnet.

Im Folgenden wird das Siebelement 110 noch einmal mit anderen Worten beschrieben:
Das Siebelement 110 weist gemäß diesem Ausführungsbeispiel vier langkreisförmige Öffnungen in Form der Durchlassöffnungen 205 und vier Ausstanzungen in Form der zusätzlichen Durchlassöffnungen 220 auf, bei denen die zusätzlichen Laschen 225 zu nach unten zeigenden Schaufeln gebogen sind. Eine hier gezeigte Anzahl, Form und Dimensionierung besagter Öffnungen und Ausstanzungen hat sich in einer Versuchsphase als vorteilhaft erwiesen.

Die zusätzlichen Laschen 225 bewirken, dass Streugut wie Sand, der direkt auf dem in Fig. 1 beschriebenen Dosiergehäuse zum Liegen gekommen ist und nicht in die Zulauföffnung einrieseln kann, mitgenommen und in die Zulauföffnung geschoben oder geschaufelt wird.

Somit kann sich in einem konstruktionsbedingten Totvolumen in einer Umgebung der Zulauföffnung zur Zellenradschleuse vorteilhafterweise unter Verwendung des Siebelements 110 kein Streugut ansammeln.

Die zusätzlichen Laschen 225, die auch als "Laschen nach unten" bezeichnet werden können, dienen dazu, den Sand unter dem Blech in den Einlass weiterzufördern und dadurch den Sandnachfluss zu begünstigen. Weiterhin wird durch die zusätzlichen Laschen 225 verhindert, dass sich der Sand unter dem Blech verfestigt. Eine Form der zusätzlichen Laschen 225 und eine Ausrichtung, ein Winkel in Bezug auf den Mittelpunkt, können variieren.

Eine Drehmomentübertragung ist gemäß diesem Ausführungsbeispiel über Sechskant ermöglicht. Gemäß einem alternativen Ausführungsbeispiel ist die Wellenkoppeleinrichtung 130 dazu ausgeformt, um die Drehmomentübertragung über Polygon, Passfeder und/oder Verzahnung zu ermöglichen. Die Wellenkoppeleinrichtung 130 ist mit der Welleneinrichtung verschweißbar und/oder verklebbar und/oder verklemmbar und/oder verpressbar ausgestaltet.

Die Laschen 200 und/oder weiteren Laschen 210, die auch als "nach oben gerichtete Laschen" bezeichnet werden können, sorgen insbesondere bei nassem Sand, insbesondere bis 0,5 Vol%, für ein Aufbrechen und Lockern des Sandgefüges. Die Laschen 200 und/oder weiteren Laschen 210 sind gemäß einem alternativen Ausführungsbeispiel nicht einstückig mit dem Plattenelement 125 ausgeformt, sondern angeschweißt und/oder angeschraubt und/oder angenietet und/oder als Bolzen ausgeführt. Gemäß einem alternativen Ausführungsbeispiel sind die Lasche 200 und/oder weiteren Laschen 210 nicht wie hier gezeigt rechteckig, sondern halbrund oder dreieckig oder in anderer brauchbarer Form ausgeführt. Ein Winkel der Laschen 200 und/oder weiteren Laschen 210 ist geneigt zum Mittelpunkt, um den Sand in eine Richtung schaufeln zu können.

Die Durchflussöffnungen 205 und/oder zusätzlichen Durchflussöffnungen 220 dienen dem Durchfluss des Sandes unter das Siebelement 110 in einen Bereich des Einlasses zum Zellrad. Gemäß diesem Ausführungsbeispiel weist zumindest eine der Öffnungen 205, 220 eine Mindestgröße von ca. 10x einer mittleren Korngröße des Streuguts auf. Ebenso ist bei der Dimensionierung darauf geachtet, dass genug Durchfluss gegeben ist, um die Zellen bei maximaler Bewegungsgeschwindigkeit vollfüllen zu können. Ebenso sind die Öffnungen 205, 220 klein genug, um Fremdkörper zurückzuhalten.

Eine Siebfunktion des Siebelements 110 hält vorteilhafterweise größere Teile wie Steine, Kaugummis, Fettklumpen o. ä. vom Zellrad bzw. der nachgelagerten Fördereinheit fern.

An einer Sandungsanlage mit mechanischer Sanddosierung mittels Zellenrad, wie sie in Fig. 1 beschrieben ist, und mit dem hier gezeigten eingebauten Siebelement 110 wurden im Prüffeld mögliche Fehler im Fahrzeugeinsatz simuliert. Hierbei wurden als Fremdkörper Steine, Folienreste, Besenhaare und Kaugummi im Sandvorratsbehälter angeordnet, der auch als Sandkasten bezeichnet werden kann. Außerdem wurde 0,5 % nasser Sand eingesetzt.

Die Sandungsanlage zeigte keinerlei Ausfälle oder Beeinträchtigungen bei der Einbringung der Fremdkörper in die Sandmenge. Die Mittelwerte aus den Messdaten sind nahezu identisch mit den Mittelwerten aus der Referenzmessung. Bei allen Fremdkörpern konnten nach der Versuchsdurchführung keinerlei Schäden festgestellt werden. Im Fehlerfall Steine und Besenhaare wurden keine Rückstände der Fremdkörper nach der Messung in der Sandungsanlage gefunden. Im Fehlerfall Kaugummi wurden die Probekörper nach der Messung beim Siebelement 110 gefunden. Im Fehlerfall Folienreste konnte nach der Messung eines von drei Folienstücken beim Siebelement 110 gefunden werden. Der Sandvorratsbehälter 140 konnte ohne Ausfall vollständig entleert werden.

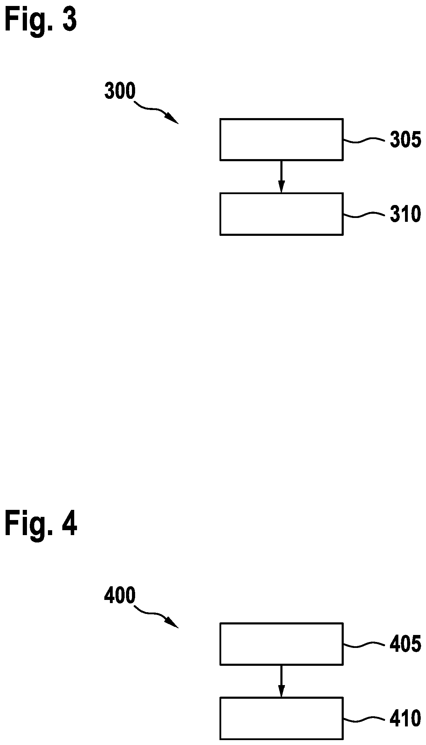

**Fig. 3** zeigt ein Ablaufdiagramm eines Verfahrens 300 zum Erzeugen eines Siebelements gemäß einem Ausführungsbeispiel. Dabei kann es sich um ein Verfahren 300 zum Erzeugen eines der in Fig. 1 oder 2 beschriebenen Siebelemente handeln.

Das Verfahren 300 weist einen Schritt 305 des Stanzens, Ausformens und/oder Laserns und einen Schritt 310 des Anordnens auf. Im Schritt 305 des Stanzens, Ausformens und/oder Laserns wird zumindest eine Durchlassöffnung in ein Plattenelement gestanzt/gelasert. Im Schritt 310 des Anordnens wird zumindest eine Lasche, die sich quer zu einer Hauptoberfläche des Plattenelements von dem Plattenelement weg erstreckt angeordnet, um das Siebelement zu erzeugen.

Im Schritt 305 des Stanzens, Ausformens und/oder Laserns wird gemäß diesem Ausführungsbeispiel optional außerdem eine Wellenkoppeleinrichtung in das Plattenelement gestanzt. Im Schritt 310 des Anordnens wird gemäß diesem Ausführungsbeispiel optional ein gestanzter Plattenabschnitt des Plattenelements gebogen, um die Lasche anzuordnen, um das Siebelement zu erzeugen.

Die hier vorgestellten Verfahrensschritte können wiederholt sowie in einer anderen als in der beschriebenen Reihenfolge ausgeführt werden.

**Fig. 4** zeigt ein Ablaufdiagramm eines Verfahrens 400 zum Betreiben eines Siebelements gemäß einem Ausführungsbeispiel. Dabei kann es sich um ein Verfahren 400 zum Betreiben eines der in Fig. 1 oder 2 beschriebenen Siebelemente handeln.

Das Verfahren 400 weist einen Schritt 405 des Bewegens und einen Schritt 410 des Förderns auf. Im Schritt 405 des Bewegens wird das Siebelement bewegt, um gesiebtes Streugut zu erhalten. Im Schritt 410 des Förderns wird das gesiebte Streugut mittels des sich bewegenden Siebelements gefördert.

Die hier vorgestellten Verfahrensschritte können wiederholt sowie in einer anderen als in der beschriebenen Reihenfolge ausgeführt werden.

### BEZUGSZEICHENLISTE

- 100: Sandungsanlage
- 105: Sandungsvorrichtung
- 110: Siebelement
- 115: Welleneinrichtung
- 120: Wellenhülse
- 122: Zellenrad
- 125: Plattenelement
- 130: Wellenkoppeleinrichtung
- 135: Zulauföffnung
- 140: Sandvorratsbehälter
- 145: Gehäuse
- 150: Gehäusehauptstück
- 155: Gehäusebodenplatte
- 160: Buchse
- 165: obere Deckscheibe
- 170: untere Deckscheibe
- 175: Getriebe
- 180: Motor
- 185: Glocke
- 187: Auslassöffnung
- 190: Dichtring
- 192: Montagering
- 194: Rinne
- 196: Wellendichtring
- 198: pneumatische Fördereinrichtung

- 200: Lasche
- 205: Durchlassöffnung
- 210: weitere Lasche
- 215: Hauptoberfläche
- 220: zusätzliche Durchlassöffnung
- 225: zusätzliche Lasche
- 230: gegenüberliegende Hauptoberfläche

- 300: Verfahren zum Erzeugen eines Siebelements
- 305: Schritt des Stanzens Ausformens und/oder Laserns
- 310: Schritt des Anordnens

- 400: Verfahren zum Betreiben eines Siebelements
- 405: Schritt des Bewegens
- 410: Schritt des Förderns

## Patentansprüche

1. Siebelement (110) zum Sieben und Fördern von Streugut zur Aufnahme an eine Sandungsvorrichtung (105) einer Sandungsanlage (100) für ein Fahrzeug, wobei das Siebelement (110) zumindest die folgenden Merkmale aufweist:
- ein Plattenelement (125) mit einer Wellenkoppeleinrichtung (130) zum Koppeln des Siebelements (110) mit einer Welleneinrichtung (115) eines Zellenrads (122) der Sandungsvorrichtung (105);
- zumindest eine in dem Plattenelement (125) angeordnete Durchlassöffnung (205) zum Durchlassen von Streugut durch das Siebelement (110); und
- zumindest eine Lasche (200), die sich quer zu einer Hauptoberfläche (215) des Plattenelements (125) von dem Plattenelement (125) weg erstreckt.

2. Siebelement (110) gemäß Anspruch 1, bei dem das Plattenelement (125) als ein Blech ausgeformt ist.

3. Siebelement (110) gemäß einem der vorangegangenen Ansprüche, bei dem das Plattenelement (125) kreisförmig ausgestaltet ist.

4. Siebelement (110) gemäß einem der vorangegangenen Ansprüche, bei dem die Wellenkoppeleinrichtung (130) in einer Mitte des Plattenelements (125) angeordnet ist, insbesondere wobei die Wellenkoppeleinrichtung (130) als eine Wellendurchgangsöffnung zum Durchführen der Welleneinrichtung (115) ausgeformt ist.

5. Siebelement (110) gemäß einem der vorangegangenen Ansprüche, bei dem sich die Lasche (200) von einer Innenrandseite der Durchlassöffnung (205) erstreckt.

6. Siebelement (110) gemäß einem der vorangegangenen Ansprüche, mit einer weiteren Lasche (210), die sich quer zu der Hauptoberfläche (215) von dem Plattenelement (125) weg erstreckt, insbesondere wobei sich die weitere Lasche (210) von einer quer zu der Innenrandseite angeordneten weiteren Innenrandseite der Durchlassöffnung (205) erstreckt.

7. Siebelement (110) gemäß einem der vorangegangenen Ansprüche, mit zumindest einer in dem Plattenelement (125) angeordneten zusätzlichen Durchlassöffnung (220) und/oder zumindest einer zusätzlichen Lasche (225), die sich quer zu einer der Hauptoberfläche (215) gegenüberliegenden Hauptoberfläche (230) des Plattenelements (125) von dem Plattenelement (125) weg erstreckt.

8. Siebelement (110) gemäß einem der vorangegangenen Ansprüche, bei dem das Plattenelement (125) und die Lasche (200) und/oder die weitere Lasche (210) und/oder die zusätzliche Lasche (225) einstückig ausgeformt sind, insbesondere wobei die Durchlassöffnung (205) und/oder die zusätzliche Durchlassöffnung (220) durch ein Stanzverfahren und/oder die Lasche (200) und/oder die weitere Lasche (210) und/oder die zusätzliche Lasche (225) durch ein Biegeverfahren eines gestanzten und/oder gelaserten Plattenabschnitts des Plattenelements (125) erzeugt wurde.

9. Siebelement (110) gemäß einem der vorangegangenen Ansprüche, mit vier der Durchlassöffnungen (205) und/oder vier der Laschen (200) und/oder vier der weiteren Laschen (210) und/oder vier der zusätzlichen Durchlassöffnungen (220) und/oder vier der zusätzlichen Laschen (225).

10. Siebelement (110) gemäß Anspruch 9, bei dem die Durchlassöffnungen (205) und die zusätzlichen Durchlassöffnungen (220) um die Wellenkoppeleinrichtung (130) herum angeordnet sind, insbesondere wobei die Durchlassöffnungen (205) jeweils benachbart zu den zusätzlichen Durchlassöffnungen (220) angeordnet sind.

11. Sandungsvorrichtung (105) mit einem Siebelement (110) gemäß einem der vorangegangenen Ansprüche, insbesondere wobei das Siebelement (110) an einer Welleneinrichtung (115) angeordnet und/oder befestigt ist.

12. Verfahren (300) zum Erzeugen eines Siebelements (110) gemäß einem der Ansprüche 1 bis 10, wobei das Verfahren (300) zumindest die folgenden Schritte umfasst:
- Stanzen (305), Ausformen und/oder Lasern zumindest einer Durchlassöffnung (205) in ein Plattenelement (125); und
- Anordnen (310) zumindest einer Lasche (200), die sich quer zu einer Hauptoberfläche (215) des Plattenelements (125) von dem Plattenelement (125) weg erstreckt, um das Siebelement (110) zu erzeugen.

13. Verfahren (400) zum Betreiben eines Siebelements (110) gemäß einem der Ansprüche 1 bis 10, wobei das Verfahren (400) zumindest die folgenden Schritte umfasst:
- Bewegen (405) des Siebelements (110), um gesiebtes Streugut zu erhalten; und
- Fördern (410) des gesiebten Streuguts mittels des sich bewegenden Siebelements (110).

## Claims

1. A screening element (110) for screening and conveying grit material for receiving by a sanding device (105) of a sanding apparatus (100) for a vehicle, wherein the screening element (110) has at least the following features:
- a plate element (125) having a shaft coupling installation (130) for coupling the screening element (110) to a shaft installation (115) of a rotary valve (122) of the sanding device (105),
- at least one passage opening (205) which for passing grit material through the screening element (110) is disposed in the plate element (125); and
- at least one lug (200) which from the plate element (125) extends away transversely to a main surface (215) of the plate element (125).

2. The screening element (110) as claimed in claim 1, wherein the plate element (125) is configured as a sheet metal plate.

3. The screening element (110) as claimed in one of the preceding claims, wherein the plate element (125) is designed so as to be circular.

4. The screening element (110) as claimed in one of the preceding claims, wherein the shaft coupling installation (130) is disposed in a center of the plate element (125), in particular wherein the shaft coupling installation (130) is configured as a shaft passage opening for guiding therethrough the shaft installation (115).

5. The screening element (110) as claimed in one of the preceding claims, wherein the lug (200) extends from an internal peripheral side of the passage opening (205).

6. The screening element (110) as claimed in one of the preceding claims, having a further lug (210) which from the plate element (125) extends away transversely to the main surface (215), in particular wherein the further lug (210) extends from a further internal peripheral side of the passage opening (205) that is disposed transversely to the internal peripheral side.

7. The screening element (110) as claimed in one of the preceding claims, having at least one additional passage opening (220) which is disposed in the plate element (125), and/or at least one additional lug (225) which from the plate element (125) extends away transversely to a main surface (230) of the plate element (125) that is opposite the main surface (215).

8. The screening element (110) as claimed in one of the preceding claims, wherein the plate element (125) and the lug (200) and/or the further lug (210) and/or the additional lug (225) are configured so as to be integral, in particular wherein the passage opening (205) and/or the additional passage opening (220) have/has been generated by a punching method, and/or the lug (200) and/or the further lug (210) and/or the additional lug (225) have/has been generated by a bending method applied to a punched and/or laser-machined plate portion of the plate element (125).

9. The screening element (110) as claimed in one of the preceding claims, having four of the passage openings (205) and/or four of the lugs (200) and/or four of the further lugs (210) and/or four of the additional passage openings (220) and/or four of the additional lugs (225).

10. The screening element (110) as claimed in claim 9, wherein the passage openings (205) and the additional passage openings (220) are disposed about the shaft coupling installation (130), in particular wherein the passage openings (205) are in each case disposed so as to be adjacent to the additional passage openings (220).

11. A sanding device (105) having a screening element (110) as claimed in one of the preceding claims. in particular wherein the screening element (110) is disposed on and/or fastened to a shaft installation (115).

12. A method (300) for generating a screening element (110) as claimed in one of claims 1 to 10, wherein the method (300) comprises at least the following steps:
- punching (305), configuring and/or laser-machining at least one passage opening (205) in a plate element (125); and
- disposing (310) at least one lug (200) which from the plate element (125) extends away transversely to a main surface (215) of the plate element (125), so as to generate the screening element (110).

13. A method (400) for generating a screening element (110) as claimed in one of claims 1 to 10, wherein the method (400) comprises at least the following steps:
- moving (405) the screening element (110) so as to obtain screened grit material; and
- conveying (410) the screened grit material by means of the moving screening element (110).

## Revendications

1. Elément (110) de tamisage, pour le tamisage et le transport de produit à épandre, destiné à être reçu dans un dispositif (105) de sablage d'une installation (100) de sablage pour un véhicule, dans lequel l'élément (110) de tamisage a au moins les caractéristiques suivantes :
- un élément (125) en plaque ayant un dispositif (130) d'accouplement d'arbre pour l'accouplement de l'élément (110) de tamisage à un dispositif (115) à arbre d'une roue (122) à alvéoles du dispositif (105) de sablage ;
- au moins une ouverture (205) de passage disposée dans l'élément (125) en plaque pour le passage de produit à épandre à travers l'élément (110) de tamisage ; et
- au moins une languette (200), qui s'étend transversalement à une surface (215) principale de l'élément (125) en plaque, en s'éloignant de l'élément (125) en plaque.

2. Elément (110) de tamisage suivant la revendication 1, dans lequel l'élément (125) en plaque est conformé sous la forme d'une tôle.

3. Elément (110) de tamisage suivant l'une des revendications précédentes, dans lequel l'élément (125) en plaque est circulaire.

4. Elément (110) de tamisage suivant l'une des revendications précédentes, dans lequel le dispositif (130) d'accouplement d'arbre est monté au milieu de l'élément (125) en plaque, dans lequel notamment le dispositif (130) d'accouplement d'arbre est conformé sous la forme d'une ouverture de passage d'un arbre, pour le passage du dispositif (115) à arbre.

5. Elément (110) de tamisage suivant l'une des revendications précédentes, dans lequel la languette (200) s'étend d'un côté de bord intérieur de l'ouverture (205) de passage.

6. Elément (110) de tamisage suivant l'une des revendications précédentes comprenant une autre languette (210), qui s'étend perpendiculairement à la surface (215) principale, en s'éloignant de l'élément (125) en plaque, dans lequel notamment l'autre languette (210) s'étend d'un autre côté de bord, disposé transversalement au côté de bord intérieur, de l'ouverture (205) de passage.

7. Elément (110) de tamisage suivant l'une des revendications précédentes, comprenant au moins une ouverture (220) de passage supplémentaire disposée dans l'élément (125) en plaque et/ou au moins une languette (225) supplémentaire, qui s'étend transversalement à une surface (230) principale opposée à la surface (215) principale de l'élément (125) en plaque, en s'éloignant de l'élément (125) en plaque.

8. Elément (110) de tamisage suivant l'une des revendications précédentes, dans lequel l'élément (125) en plaque et la languette (200) et/ou l'autre languette (210) et/ou la languette (225) supplémentaire sont formées d'une seule pièce, dans lequel notamment l'ouverture (205) de passage et/ou l'ouverture (220) de passage supplémentaire a été produite par un procédé d'estampage et/ou la languette (200) et/ou l'autre languette (210) et/ou la languette (225) supplémentaire a été produite par un procédé de pliage d'un flanc de l'élément (125) en plaque découpé et/ou traité au laser.

9. Elément (110) de tamisage suivant l'une des revendications précédentes, comprenant quatre des ouvertures (205) de passage et/ou quatre des languettes (200) et/ou quatre des autres languettes (210) et/ou quatre des ouvertures (220) de passage supplémentaire et/ou quatre des languettes (225) supplémentaires.

10. Elément (110) de tamisage suivant la revendication 9, dans lequel les ouvertures (205) de passage et les ouvertures (220) de passage supplémentaire sont disposées autour du dispositif (130) d'accouplement d'arbre, dans lequel notamment les ouvertures (205) de passage sont disposées respectivement au voisinage des ouvertures (220) de passage supplémentaires.

11. Installation (105) de sablage, comprenant un élément (110) de tamisage suivant l'une des revendications précédentes, dans laquelle notamment l'élément (110) de tamisage est monté et/ou fixé à un dispositif (115) à arbre.

12. Procédé (300) de production d'un élément (110) de tamisage suivant l'une des revendications 1 à 10, dans lequel le procédé (300) comprend au moins les stades suivants :
- découpage (305), formation et/ou obtention au laser d'au moins une ouverture (205) de passage dans un élément (125) en plaque ; et
- mise (310) d'au moins une languette (200), qui s'étend transversalement à une surface (215) principale de l'élément (125) en plaque, en s'éloignant de l'élément (125) en plaque pour produire l'élément (110) de tamisage.

13. Procédé (400) pour faire fonctionner un élément (110) de tamisage suivant l'une des revendications 1 à 10, dans lequel le procédé (400) comprend au moins les stades suivants :
- déplacement (405) de l'élément (110) de tamisage pour obtenir du produit à épandre tamisé ; et
- transport (410) du produit à épandre tamisé au moyen de l'élément (110) de tamisage en déplacement.
